# EUROPÄISCHE PATENTANMELDUNG

(11) **EP 2 284 692 A2**
(43) Veröffentlichungstag der Anmeldung: **16.02.2011**
(21) Anmeldenummer: 10171794.0
(22) Anmeldetag: 03.08.2010
(51) Int. Cl.: G06F 9/30, G06F 15/78

(54) **Datenverarbeitungseinheit und Steuervorrichtung zur Steuerung eines elektrischen Antriebs**

(30) Priorität: 04.08.2009 DE 102009037158
(71) Anmelder: Lenze Automation GmbH, 40667 Meerbusch (DE)
(72) Erfinder: Düsterberg, Dirk, 31860, Emmerthal (DE); Klaus, Uwe, 38321, Denkte (DE); Hohnsbein, Thorsten, 31855, Aerzen (DE)
(74) Vertreter: Patentanwälte Ruff, Wilhelm, Beier, Dauster & Partner

(57) **Zusammenfassung**

Eine Datenverarbeitungseinheit (100) zur Steuerung eines elektrischen Antriebs umfasst einen Befehlsspeicher (101) zum Speichern von Programmbefehlen, einen Datenspeicher (102) zum Speicher von Daten, die während eines Ausführens der Programmbefehle benötigt werden, einen Parameterspeicher (103) zum Speichern von Konstanten und Parametern, die während des Ausführens der Programmbefehle benötigt werden, und ein Rechenwerk (105), das mit dem Befehlsspeicher, dem Datenspeicher und dem Parameterspeicher gekoppelt ist und das dazu ausgebildet ist, während eines Befehlszyklus einen der im Befehlsspeicher gespeicherten Programmbefehle auszuführen, wobei der Befehlsspeicher, der Datenspeicher und der Parameterspeicher voneinander unabhängige Speicher sind, die während eines Befehlszyklus gleichzeitig und unabhängig voneinander durch das Rechenwerk lesbar und/oder beschreibbar sind.

## Beschreibung

Die Erfindung betrifft eine Datenverarbeitungseinheit sowie eine Steuervorrichtung zur Steuerung eines elektrischen Antriebs.

Um komplexe regelungstechnische Aufgabenstellungen in der elektrischen Antriebstechnik mittels Datenverarbeitungseinheiten, beispielsweise Mikroprozessoren, in Echtzeit lösen zu können, ist es erforderlich, dass die Datenverarbeitungseinheiten einerseits die benötigte Rechenleistung zur Verfügung stellen und andererseits auf Ereignisse, die im Kontext der regelungstechnische Aufgabenstellungen auftreten, innerhalb definierter Antwortzeiten reagieren.

Datenverarbeitungseinheiten in Form von herkömmlichen (Mikro- )Prozessoren sind üblicherweise nicht für die spezifischen Anforderungen im Hinblick auf die Steuerung bzw. Regelung von elektrischen Antrieben ausgelegt, sei es im Hinblick auf die notwendige Rechenleistung oder im Hinblick auf ihre Echtzeitfähigkeit. Parallelrechnerarchitekturen sind üblicherweise zwar im Hinblick auf höchste Rechenleistungen optimiert, sind jedoch typisch nicht oder nur bedingt echtzeitfähig.

Der Erfindung liegt die Aufgabe zugrunde, eine Datenverarbeitungseinheit sowie eine Steuervorrichtung zur Steuerung eines elektrischen Antriebs zur Verfügung zu stellen, die für komplexe regelungstechnische Echtzeitanwendungen die benötigte Rechenleistung und Echtzeitfähigkeit aufweisen, die skalierbar sind und die insbesondere mittels eines herkömmlichen Field Programmable Gate Arrays (FPGA) implementierbar sind.

Die Erfindung löst diese Aufgabe durch eine Datenverarbeitungseinheit nach Anspruch 1 sowie eine Steuervorrichtung nach Anspruch 7. Bevorzugte Ausführungsformen sind Gegenstand der Unteransprüche, deren Wortlaut hiermit durch Bezugnahme zum Inhalt der Beschreibung gemacht wird, um unnötige Wiederholungen zu vermeiden.

Die Datenverarbeitungseinheit zur Steuerung eines elektrischen Antriebs umfasst einen Befehlsspeicher zum Speichern von Programmbefehlen (auch Opcode oder Maschinenbefehle), beispielsweise in Form eines RAM oder ROM, einen Datenspeicher zum Speichern von Daten, die während eines Ausführens der Programmbefehle benötigt werden, einen Parameterspeicher zum Speichern von Konstanten und Parametern, beispielsweise P-, 1- und D-Parameter eines PID-Reglers, die während des Ausführens der Programmbefehle benötigt werden, beispielsweise in Form eines RAM oder ROM, und ein Rechenwerk, das mit dem Befehlsspeicher, dem Datenspeicher und dem Parameterspeicher gekoppelt ist und das dazu ausgebildet ist, während eines Befehls- bzw. Maschinenzyklus einen der im Befehlsspeicher gespeicherten Programmbefehle auszuführen, wobei der Befehlsspeicher, der Datenspeicher und der Parameterspeicher voneinander unabhängige Speicher sind, die während eines Befehlszyklus gleichzeitig und unabhängig voneinander durch das Rechenwerk lesbar und/oder beschreibbar sind. Ein Befehlszyklus gliedert sich hierbei beispielsweise in die Schritte: Lesen eines neuen Befehls aus dem Befehlsspeicher durch das Rechenwerk gemäß einer aktuellen Adresse eines Befehlszählers (auch Program Counter(PC)), Aktualisieren des Befehlszählers, Dekodieren des Befehls durch das Rechenwerk, Zugreifen auf Operanden des Befehls, die im Datenspeicher bzw. im Parameterspeicher gespeichert sind, durch das Rechenwerk, Ausführen der Operation (z.B. Addition) durch das Rechenwerk sowie Speichern eines Ergebnisses der Operation im Datenspeicher durch das Rechenwerk.

In einer Weiterbildung umfasst der Datenspeicher mehrere unterschiedliche Speicheradressen, denen Speicherzellen entsprechen, die über die unterschiedlichen Speicheradressen getrennt voneinander adressierbar sind. Der Datenspeicher ist dabei derart ausgebildet, dass während eines Befehlszyklus gleichzeitig und unabhängig voneinander eine erste Speicheradresse bzw. Speicherzelle und eine zweite, von der ersten Speicheradresse bzw. Speicherzelle unabhängige Speicheradresse bzw. Speicherzelle des Datenspeichers durch das Rechenwerk lesbar sind und eine dritte Speicheradresse bzw. Speicherzelle durch das Rechenwerk beschreibbar ist. Die erste und die zweite Speicheradresse können verschieden oder identisch sein. Wenn beispielsweise ein Wert einer Speicherzelle zu quadrieren ist, können die erste Speicheradresse und die zweite Speicheradresse identisch sein. Diese Eigenschaft des Datenspeichers ermöglicht es dem Rechenwerk (Rechen-)Operationen mit Operanden unmittelbar aus dem Datenspeicher auszuführen. Mit anderen Worten braucht das Rechenwerk im Vergleich zu herkömmlichen Load/Store-Architekturen keine vorgeschaltete Ladeoperation eines Operanden aus einem Hauptspeicher in ein Register durchzuführen, wodurch sich die Verarbeitungsgeschwindigkeit erheblich vergrößert. Erfindungsgemäß kann jede Speicheradresse bzw. Speicherzelle mit jeder anderen Speicheradresse bzw. Speicherzelle verrechnet werden und das entsprechende Rechenoperationsergebnis kann in eine beliebige Speicheradresse bzw. Speicherzelle des Datenspeichers geschrieben werden. Das Rechenoperationsergebnis steht weiterhin untermittelbar dem nächsten Befehl zur Verfügung. Die Speicheradressen bzw. die entsprechenden Speicherzellen des Datenspeichers bilden somit herkömmliche Prozessorregister ab, wobei aufgrund der spezifischen Ausbildung des Datenspeichers Load/Store-Befehle vermieden werden können, wodurch die erzielbare Rechenleistung deutlich zunimmt. Durch die Aufteilung von Programmbefehlen, Daten und Parametern in jeweils eigene, unabhängige Speicher, die Struktur des Datenspeichers, die einen herkömmlichen Akkumulator, d.h. ein dediziertes Register, in dem Ergebnisse des Rechenwerks gespeichert werden, überflüssig macht und aufgrund der Tatsache, dass Konstanten und Parameter nicht in den Programmbefehlen bzw. dem Programmcode gespeichert sind, kann jeder Programmschritt bzw. Befehl innerhalb nur eines einzigen Befehlszyklus ausgeführt werden, ohne dass hierzu eine aufwendige Prozessorpipeline benötigt wird.

Bevorzugt sind die erste Speicheradresse und die dritte Speicheradresse oder die zweite Speicheradresse und die dritte Speicheradresse identisch, d.h. ein Rechenergebnis einer Rechenoperation, das auf der ersten Speicheradresse bzw. der zweiten Speicheradresse als Operand basiert, kann wieder in die erste Speicheradresse bzw. die zweite Speicheradresse zurückgespeichert werden.

In einer Weiterbildung umfasst der Datenspeicher ein Triple-Port-Ram oder ein Quad-Port-RAM, welches die mehrfachen gleichzeitigen Lese-und/oder Schreiboperationen ermöglicht.

In einer Weiterbildung ist ein arithmetischer Coprozessor vorgesehen, der dazu ausgebildet ist, parallel zum Rechenwerk arithmetische Operationen durchzuführen. Der arithmetische Coprozessor realisiert hierbei die üblicherweise bei der Steuerung des elektrischen Antriebs anfallenden Rechenoperationen parallel bzw. gleichzeitig zu einer Befehlsausführung des Rechenwerks.

In einer Weiterbildung ist die Datenverarbeitungseinheit mittels eines FPGA implementiert bzw. in dieses integriert.

Die Steuervorrichtung zur Steuerung eines elektrischen Antriebs umfasst eine erste Steuerungskomponente, die dazu ausgebildet ist, eine erste Steuerungsteilaufgabe zu erfüllen, mindestens eine zweite Steuerungskomponente, die dazu ausgebildet ist, mindestens eine zweite Steuerungsteilaufgabe zu erfüllen, und eine Mailbox-Komponente, die mit der ersten Steuerungskomponente und mit der mindestens einen zweiten Steuerungskomponente gekoppelt ist und dazu ausgebildet ist, Daten zwischen der ersten Steuerungskomponente und der mindestens einen zweiten Steuerungskomponente zu übertragen, wobei die erste Steuerungskomponente und die mindestens eine zweite Steuerungskomponente die erfindungsgemäße Datenverarbeitungseinheit umfassen.

In einer Weiterbildung ist zusätzlich eine dritte Steuerungskomponente vorgesehen, die eine erfindungsgemäße Datenverarbeitungseinheit umfasst, wobei die erste Steuerungskomponente einen Längsstromregler bildet, die zweite Steuerungskomponente einen Querstromregler bildet und die dritte Steuerungskomponente einen Drehzahlregler bildet.

Bevorzugte Ausführungsformen der Erfindung sind in den Zeichnungen dargestellt. Hierbei zeigt schematisch:
- Fig. 1: eine Datenverarbeitungseinheit zur Steuerung eines elektri- schen Antriebs und
- Fig. 2: eine Steuervorrichtung zur Steuerung eines elektrischen An- triebs mit einem Längsstromregler, einem Querstromregler und einem Drehzahlregler, die jeweils eine erfindungsgemäße Da- tenverarbeitungseinheit von Fig. 1 umfassen.

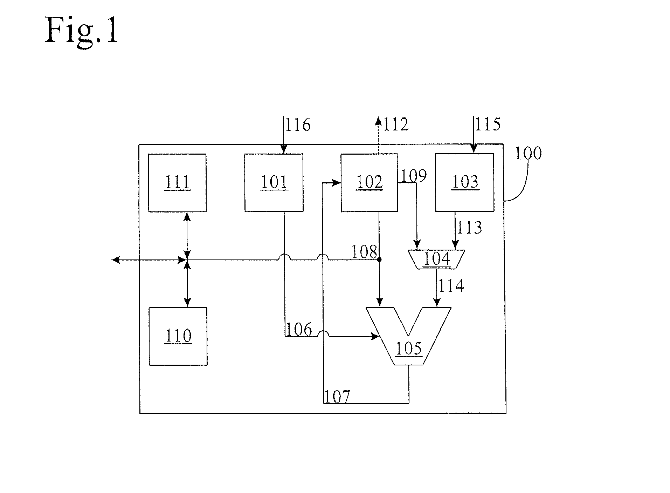

Fig. 1 zeigt eine erfindungsgemäße Datenverarbeitungseinheit 100 zur Steuerung eines nicht dargestellten elektrischen Antriebs, beispielsweise eines Servosystems.

Die Datenverarbeitungseinheit 100, die in ein FPGA integriert ist, umfasst einen Befehlsspeicher 101 zum Speichern von Programmbefehlen bzw. Opcode in Form eines RAM, einen Datenspeicher 102 zum Speichern von Daten, die während eines Ausführens der Programmbefehle benötigt werden, in Form eines Quad-Port-RAM, einen Parameterspeicher 103 zum Speichern von Konstanten und Parametern, die während des Ausführens der Programmbefehle benötigt werden, einen Multiplexer 104, ein Rechenwerk 105, einen arithmetischen Coprozessor 110 und eine Schnittstelleneinheit 111.

Das Rechenwerk 105 ist mit dem Befehlsspeicher 101, dem Datenspeicher 102 und dem Parameterspeicher 103 gekoppelt und dazu ausgebildet, während eines einzelnen Befehlszyklus einen der im Befehlsspeicher 101 gespeicherten Programmbefehle auszuführen, wobei der Befehlsspeicher 101, der Datenspeicher 102 und der Parameterspeicher 103 voneinander unabhängige Speicher sind, die während eines einzelnen Befehlszyklus gleichzeitig und unabhängig voneinander durch das Rechenwerk 105 lesbar und beschreibbar sind

Der Multiplexer 104, der durch das Rechenwerk 105 gesteuert ist, entscheidet, ob Daten aus dem Datenspeicher 102 oder Parameter bzw. Konstanten aus dem Parameterspeicher 103 dem Rechenwerk 105 als ein Operand von zwei Operanden zur Verfügung gestellt werden.

Der arithmetische Coprozessor 110 ist dazu ausgebildet, parallel bzw. gleichzeitig zum Rechenwerk 105 arithmetische Operationen durchzuführen.

Die Schnittstelleneinheit 111 dient zur Kopplung mit nicht gezeigten Peripheriebausteinen, die durch Signale der Schnittstelleneinheit 111 angesteuert werden bzw. Signale von den Peripheriebausteinen an die Schnittstelleneinheit 111 liefern. Die Peripheriebausteine dienen beispielsweise zur Ansteuerung von Elektromotoren usw.

Der Datenspeicher 102 ist über einen Bus 108 mit einem Eingang des Rechenwerks 105 verbunden. Ein Ausgang des Rechenwerks 105, an dem ein Ergebnis einer Rechenoperation ansteht, ist über einen Bus 107 mit dem Datenspeicher 102 verbunden. Der Multiplexer 104 ist über einen Bus 109 mit dem Datenspeicher 102 und über einen Bus 113 mit dem Parameterspeicher 103 verbunden. Ein Ausgang des Multiplexers 104 ist über einen Bus 114 mit einem anderen Eingang des Rechenwerks 105 verbunden. Der Datenspeicher 102 ist über einen Bus 112 mit einer nicht dargestellten, übergeordneten Einheit verbunden, die beispielsweise Prozess- und/oder Zustandsdaten der Datenverarbeitungseinheit 100, die im Datenspeicher 102 gespeichert sind, über den Bus 112 auslesen kann. Der Bus 108 verbindet weiterhin den Datenspeicher 102 mit der Schnittstelleneinheit 111 und dem arithmetischen Coprozessor 110. Der Parameterspeicher 103 ist über einen Bus 115 mit der nicht dargestellten, übergeordneten Einheit verbunden, die über den Bus 115 die im Parameterspeicher 103 gespeicherten Konstanten und Parametern aktualisieren kann. Der Programmspeicher 101 ist über einen Bus 116 mit der nicht dargestellten, übergeordneten Einheit verbunden, die über den Bus 116 die im Programmspeicher 101 gespeicherten Befehle aktualisieren kann.

Die Datenverarbeitungseinheit 100 arbeitet wie folgt. Zunächst liest das Rechenwerk 105 einen neuen Befehl aus dem Befehlsspeicher 101 gemäß einer aktuellen Adresse eines nicht näher dargestellten Befehlszählers. Anschließend wird der Befehlszähler durch die Recheneinheit 105 oder durch eine nicht dargestellte Zustandsmaschine aktualisiert, beispielsweise um 1 erhöht. Anschließend dekodiert das Rechenwerk 105 den Befehl und greift auf ggf. vorhandene Operanden des Befehls zu, die im Datenspeicher 102 bzw. im Parameterspeicher 103 gespeichert sind. Ein Datenpfad wird hier einerseits über den Bus 108 und andererseits über den Bus 109 bzw. 113, den Multiplexer 104 und den Bus 114 gebildet.

Die erfindungsgemäße Struktur ermöglicht es der Recheneinheit 105, auf sämtliche Operanden des Befehls innerhalb von nur einem Befehlszyklus zuzugreifen, d.h. vorgeschaltete Registerladeoperationen sind nicht notwendig. Als Operanden können beispielsweise ein erster Wert, der einer ersten Adresse im Datenspeicher 102 entspricht, und ein zweiter Wert, der einer zweiten Adresse im Datenspeicher 102 entspricht, dienen. Alternativ können auch ein Wert aus dem Datenspeicher 102 sowie ein Parameter bzw. eine Konstante aus dem Parameterspeicher 103 als Operanden zur Verfügung gestellt werden. Ein Ergebnis des in der Recheneinheit 105 ausgeführten Befehls wird über den Bus 107 in den Datenspeicher 102 zurückgeschrieben, wobei die Adresse eines Operanden identisch mit derjenigen Adresse sein kann, in die das Ergebnis der Operation zurückgeschrieben wird.

Bei der Datenverarbeitungseinheit 100 werden Befehle bzw. Programmcode, Daten und Parameter in jeweils eigene, voneinander unabhängige Speicher getrennt. Weiterhin sind im Gegensatz zu herkömmlichen Prozessorarchitekturen kein spezifischer Registersatz und kein Akkumulator vorgesehen, da der Datenspeicher 102 die herkömmlichen Register-und Akkumulatorfunktionen übernimmt. Konstanten, die herkömmlicherweise Teil der Befehle bzw. des Programmcodes sind, sind in einen getrennten Speicher, nämlich den Parameterspeicher 103, ausgelagert. Da nach dem Lesen des Befehlscodes kein zweiter Lesezugriff auf den zugehörigen Parameter bzw. die zugehörige Konstante erfolgen muss, sondern Befehlscode und zugehöriger Parameter bzw. zugehörige Konstante gleichzeitig gelesen werden, erhöht sich die Programmausführungsgeschwindigkeit. Jeder Programmschritt bzw. jeder Befehl ist innerhalb eines Befehlszyklus ausführbar, ohne dass hierzu eine aufwendige Pipeline vorzusehen ist.

Der Datenspeicher 102 ist als On-Chip-Arbeitsspeicher mit Multi-Port-Struktur implementiert, so dass während eines Befehlszyklus gleichzeitig gelesen und geschrieben werden kann. Derart realisierte On-Chip-Arbeitsspeicher ersetzen herkömmliche Prozessorregister mit Null Wait-States. Ein zur Steuerung des elektrischen Antriebs benötigter Regelalgorithmus ist vollständig in den Speichern 101, 102 und 103 abbildbar, wodurch herkömmliche Load/Store-Zugriffe entfallen. Die Verarbeitungsgeschwindigkeit erhöht sich dadurch erheblich.

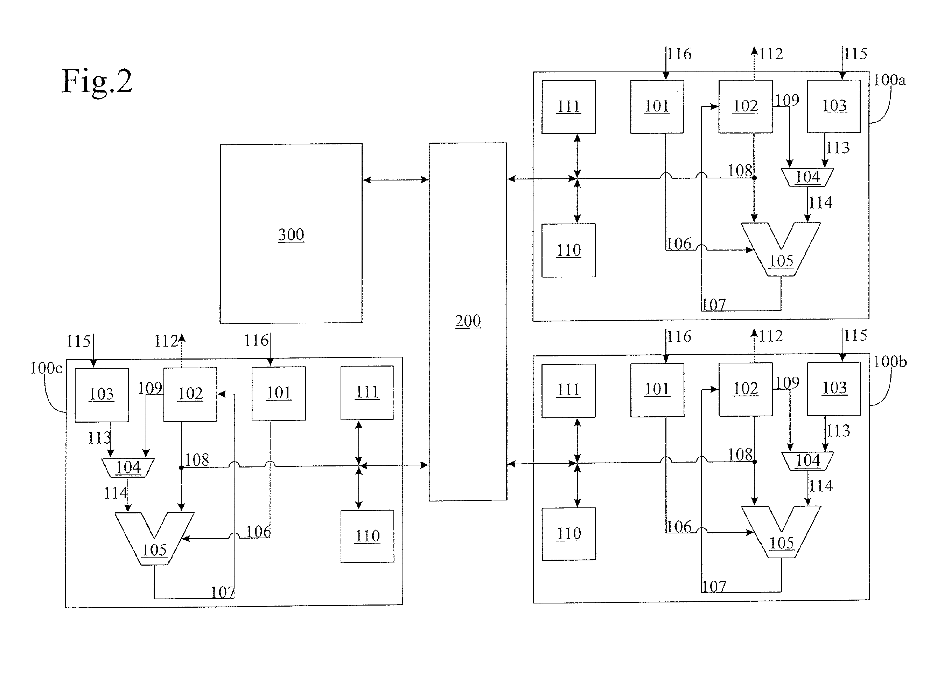

Fig. 2 zeigt eine Steuervorrichtung zur Steuerung eines elektrischen Antriebs mit einem Längsstromregler 100a, einem Querstromregler 100b und einem Drehzahlregler 100c, die jeweils die erfindungsgemäße Datenverarbeitungseinheit von Fig. 1 umfassen.

Die Regler bzw. Datenverarbeitungseinheiten 100a bis 100c sind über eine Mailbox-Komponente 200 gekoppelt. Die Mailbox-Komponente 200 ist als N-Port-RAM ausgebildet, beispielsweise mit N = 3, und umfasst Semaphorenlogik zum Arbitrieren eines Zugriffs auf die Mailbox-Komponente 200 durch die Datenverarbeitungseinheiten 100a bis 100c. Die Mailbox-Komponente 200 ist über die jeweiligen Busse 108 der Datenverarbeitungseinheiten 100a bis 100c mit diesen gekoppelt.

Eine Verwaltungseinheit 300 ist ebenfalls mit der Mailbox-Komponente 200 gekoppelt und übernimmt komplexere Verwaltungsaufgaben, beispielsweise die Abbildung eines Zustandsautomaten.

Die Steuervorrichtung umfasst die drei Datenverarbeitungseinheiten 100a bis 100c, die jeweils unterschiedliche Steuerungsteilaufgaben erfüllen. Es versteht sich, dass in Abhängigkeit von der konkreten Steuerungsaufgabe bzw. des zu steuernden elektrischen Antriebs lediglich eine einzelne Datenverarbeitungseinheit oder, bei entsprechend hoher Komplexität, auch mehr als die gezeigten drei Datenverarbeitungseinheiten parallelisierbar sind. Die erfindungsgemäße Datenverarbeitungseinheit ermöglicht hierbei eine einfache Skalierbarkeit in Abhängigkeit von der regelungstechnischen Aufgabenstellung.

Die gezeigten Ausführungsformen stellen eine Prozessorarchitektur zur Verfügung, die für komplexe regelungstechnische Echtzeitanwendungen die benötigte Rechenleistung zur Verfügung stellt. Die Prozessorarchitektur ist skalierbar und zusammen mit ggf. notwendigen Peripheriekomponenten einfach in ein FPGA zu integrieren.

## Patentansprüche

1. Datenverarbeitungseinheit (100) zur Steuerung eines elektrischen Antriebs, umfassend:
- einen Befehlsspeicher (101) zum Speichern von Programmbefehlen,
- einen Datenspeicher (102) zum Speicher von Daten, die während eines Ausführens der Programmbefehle benötigt werden,
- einen Parameterspeicher (103) zum Speichern von Konstanten und Parametern, die während des Ausführens der Programmbefehle benötigt werden, und
- ein Rechenwerk (105), das mit dem Befehlsspeicher, dem Datenspeicher und dem Parameterspeicher gekoppelt ist und das dazu ausgebildet ist, während eines Befehlszyklus einen der im Befehlsspeicher gespeicherten Programmbefehle auszuführen,
- wobei der Befehlsspeicher, der Datenspeicher und der Parameterspeicher voneinander unabhängige Speicher sind, die während eines Befehlszyklus gleichzeitig und unabhängig voneinander durch das Rechenwerk lesbar und/oder beschreibbar sind.

2. Datenverarbeitungseinheit nach Anspruch 1, **dadurch gekennzeichnet, dass** der Datenspeicher mehrere unterschiedliche Speicheradressen umfasst und derart ausgebildet ist, dass während eines Befehlszyklus gleichzeitig und unabhängig voneinander
- eine erste Speicheradresse und eine zweite, von der ersten Speicheradresse unabhängige Speicheradresse des Datenspeichers durch das Rechenwerk lesbar sind und
- eine dritte Speicheradresse durch das Rechenwerk beschreibbar ist.

3. Datenverarbeitungseinheit nach Anspruch 2, **dadurch gekennzeichnet, dass** die erste Speicheradresse bzw. die zweite Speicheradresse und die dritte Speicheradresse identisch sind.

4. Datenverarbeitungseinheit nach Anspruch 2 oder 3, **dadurch gekennzeichnet, dass** der Datenspeicher ein Triple-Port-RAM oder ein Quad-Port-RAM umfasst.

5. Datenverarbeitungseinheit nach einem der vorhergehenden Ansprüche, **gekennzeichnet durch** einen arithmetischen Koprozessor (110), der dazu ausgebildet ist, parallel zum Rechenwerk arithmetische Operationen durchzuführen.

6. Datenverarbeitungseinheit nach einem der vorhergehenden Ansprüche, **dadurch gekennzeichnet, dass** die Datenverarbeitungseinheit mittels eines FPGA implementiert ist.

7. Steuervorrichtung zur Steuerung eines elektrischen Antriebs, umfassend:
- eine erste Steuerungskomponente (100a), die dazu ausgebildet ist, eine erste Steuerungsteilaufgabe zu erfüllen,
- mindestens eine zweite Steuerungskomponente (100b), die dazu ausgebildet ist, mindestens eine zweite Steuerungsteilaufgabe zu erfüllen, und
- eine Mailboxkomponente (200), die mit der ersten Steuerungskomponente und mit der mindestens einen zweiten Steuerungskomponente gekoppelt und dazu ausgebildet ist, Daten zwischen der ersten Steuerungskomponente und der mindestens einen zweiten Steuerungskomponente zu übertragen,
- wobei die erste Steuerungskomponente und die mindestens eine zweite Steuerungskomponente jeweils eine Datenverarbeitungseinheit nach einem der Ansprüche 1 bis 6 umfassen.

8. Steuervorrichtung nach Anspruch 7, **gekennzeichnet durch** eine dritte Steuerungskomponente (100c) mit einer Datenverarbeitungseinheit nach einem der Ansprüche 1 bis 6, wobei die erste Steuerungskomponente einen Längsstromregler bildet, die zweite Steuerungskomponente einen Querstromregler bildet und die dritte Steuerungskomponente einen Drehzahlregler bildet.
